# EUROPÄISCHE PATENTSCHRIFT

(11) **EP 3 097 314 B1**
(45) Veröffentlichungstag und Bekanntmachung des Hinweises auf die Patenterteilung: **08.01.2020**
(21) Anmeldenummer: 15700690.9
(22) Anmeldetag: 19.01.2015
(51) Int. Cl.: F16B 25/10, F16B 5/02, F16B 25/00

(54) **VERFAHREN ZUM HERSTELLEN EINER BEFESTIGUNGSANORDNUNG UND VERWENDUNG EINER SCHRAUBE ZUM HERSTELLEN EINER BEFESTIGUNGSANORDNUNG**
METHOD FOR PRODUCING A SECURING ARRANGEMENT AND USE OF A SCREW FOR PRODUCING A SECURING ARRANGEMENT
PROCÉDÉ DE FABRICATION D'UN SYSTÈME DE FIXATION ET UTILISATION D'UNE VIS POUR FABRICATION D'UN SYSTÈME DE FIXATION

(30) Priorität: 23.01.2014 DE 102014000894
(43) Veröffentlichungstag der Anmeldung: 30.11.2016
(73) Patentinhaber: SFS Intec Holding AG, 9435 Heerbrugg (CH)
(72) Erfinder: MAIR, Roland, 6840 Götzis (AT); ZÄCH, Marco, 9444 Diepoldsau (CH)
(86) Internationale Anmeldenummer: PCT/EP2015/050842
(87) Internationale Veröffentlichungsnummer: WO 2015/110376

(56) Entgegenhaltungen:
- WO-A1-97/21932
- DE-A1-102004 034 246
- DE-T2- 69 200 316
- DE-U1- 8 125 414
- US-A- 2 321 379

## Beschreibung

Die Erfindung betrifft ein Verfahren zum Herstellen einer Befestigungsanordnung mit einem Schichtpaket und einer Schraube, wobei die Schraube einen mit einem Angriff ausgestatteten Schraubenkopf, einen in eine Verdrängungsspitze laufenden Schaft, ein in die Verdrängungsspitze laufendes Gewinde und einen zwischen dem Gewinde und dem Schraubenkopf angeordneten gewindefreien Schaftabschnitt aufweist.

Ferner betrifft die Erfindung die Verwendung einer Schraube zum Herstellen einer solchen Befestigungsanordnung.

Bei den vorliegend beschriebenen Verfahren, Befestigungsanordnungen und Schrauben geht es meist um die Befestigung der Außen- und Innenbleche von Sandwichpanelen. Die Blechpakete sollen dabei von Befestigern zusammengehalten werden, welche ihrerseits kostengünstig sind und bei der Verwendung einfach und schnell eingesetzt werden können.

Die gängigen Lösungen des Standes der Technik sehen allesamt vor, die zu verbindenden Bleche zu bohren, sei es durch Vorbohren mit einem herkömmlichen Bohrer oder dadurch, dass eine Schraube mit Bohrspitze verwendet wird. Wird mit einem herkömmlichen Bohrer vorgebohrt, so kann im Anschluss daran genietet oder geschraubt werden. Ist der Befestiger als Schraube ausgebildet, so sollte immer eine Rückdrehsicherung vorliegen, die es vermeidet, dass die Befestiger aus der Befestigungsanordnung verloren gehen, insbesondere durch äußere Einflüsse, wie Vibrationen oder dergleichen. Hierzu bedient man sich herkömmlich eines gewindefreien Schaftabschnittes, indem man das Gewinde vor dem Erreichen des Schraubenkopfes einfach enden lässt.

Wählt man als Befestiger der Befestigungsanordnung nicht einen solchen, der in eine Vorbohrung eingesetzt wird, sondern einen Befestiger mit Verdrängungsspitze, so ist es nicht mehr praktikabel, ein axial in einem Punkt endendes Gewinde zu verwenden. Hier müssen gemäß dem Stand der Technik doppelgängige Gewinde zum Einsatz kommen, um die erforderliche Rückdrehsicherheit zu gewährleisten. Allerdings sind doppelgängige Gewinde vergleichsweise aufwändig und teuer in der Herstellung.

Schrauben, die ein Gewinde aufweisen, welches bis in die Spitze läuft, sind insbesondere als Holzschrauben bekannt. Ebenfalls ist es bekannt, derartige Schrauben mit einem gewindefreien Abschnitt zwischen Kopf und Gewindeende auszustatten. Beispielsweise ist eine solche Schraube in der DE 202 11 445 U1 beschrieben.

Im Stand der Technik EP 0 526 261 bzw. WO 97/21932 werden u.a. Verfahrensschritte zum Eindrehen einer Schraube in ein Schichtpaket beschrieben, wobei die dem Schraubenkopf entfernteste Schicht des Schichtpaketes in Einschraubrichtung verformt und die Dicke des Schichtpakets damit im Bereich unmittelbar um die Schraube vergrössert wird. Die Schraube hierzu weist einen Schraubenkopf auf und eine in eine Verdrängungsspitze laufenden Schaft mit einem Gewinde, das bis in die Spitze läuft. Ein zwischen dem Gewinde und dem Schraubenkopf angeordneter, gewindefreier Schaftabschnitt ist dazu vorgesehen, das Schichtpaket aufzunehmen.

In EP 0 526 261 endet das Gewinde am gewindefreien Schaftabschnitt ohne weitere besondere Massnahmen. In WO 97/21932 wird, um die Rückdrehsicherheit zu verbessern, vorgeschlagen, nach dem kopfseitigen Gewindeauslauf an der Schraube einen Flansch anzubringen, wobei ein Abschnitt des Flansches in Richtung des Gewindes, vom Kopf abgewandt, abgewinkelt wird.

Der Stand der Technik US 2,321,379 schlägt eine ein- bzw. zweigängige Schraube vor, bei der der kopfseitige Gewindeauslauf ebenfalls eine zum Gewinde hin und vom Kopf abgewandte, abgewinkelte Portion aufweist.

Im Stand der Technik DE 81 25 414.8 U wird, ebenfalls zur Erhöhung der Losdrehsicherheit, eine Veränderung der Gewindegeometrie vorgeschlagen, die das kopfseitige Gewindeende betrifft. So wird angeregt die obere (also kopfseitige) Gewindeflanke einer rechtwinkligen Lage zur Schaftachse anzunähern. Das bezieht sich auf die weiterhin helixförmig verlaufende kopfseitige Gewindeflanke; der Querschnitt dieser Flanke wandelt sich dadurch von einem weitgehend regelmässigen Dreieck in einen Sägezahn.

Der Erfindung liegt die Aufgabe zugrunde, eine Verfahren und eine Verwendung zur Herstellung einer Befestigungsanordnung zur Verfügung zu stellen, bei der eine Schraube in einfacher Weise ohne Vorbohren in ein Schichtpaket, insbesondere ein Blechpaket, eingedreht werden kann, wobei gleichzeitig eine ausreichende Rückdrehsicherheit zur Verfügung zu stellen ist. Es sollen hohe Anzugskräfte generierbar und hohe Scherkräfte aufnehmbar sein.

Die Erfindung baut auf folgenden Schritten auf:
- Eindrehen der Schraube in das Schichtpaket, wobei zumindest die von dem Schraubenkopf am weitesten entfernte Schicht des Schichtpakets in Einschraubrichtung verformt wird, so dass eine Dicke Dₚ des Schichtpaketes in einem Bereich unmittelbar um die Schraube vergrößert wird,
- Fortsetzen des Eindrehens der Schraube, bis der Schraubenkopf an dem Schichtpaket anschlägt, wobei in diesem Moment eine maximale Schichtpaketdicke D_{p, max} erreicht ist und die Länge L_{F} des gewindefreien Schaftabschnittes um höchstens 10% kleiner und um höchstens 30% größer ist als die maximale Schichtpaketdicke D_{p, max}.

Die zugehörige Schraube weist einen mit einem Angriff ausgestatteten Schraubenkopf, einen in eine Verdrängungsspitze (22) laufenden Schaft (24), ein in die Verdrängungsspitze laufendes Gewinde (26) und einen zwischen dem Gewinde (26) und dem Schraubenkopf (20) angeordneten gewindefreien Schaftabschnitt (28) auf. Das Gewinde benachbart zu dem gewindefreien Schaftabschnitt umfasst mehrere Auflagepunkte für das Schichtpaket, die den gleichen Abstand zum Schraubenkopf aufweisen und so den gewindefreien Schaftabschnitt (28) begrenzen. Diese Auflagepunkte sind so ausgebildet, dass das Gewinde in eine plane, sich radial erstreckende Ebene ausläuft.

Durch eine auf diese Weise erfolgende geeignete Wahl der Länge L_{F} des gewindefreien Schaftabschnittes wird sichergestellt, dass das Gewinde nach vollständigem Eindrehen der Schraube, das heißt, wenn insbesondere der Schraubkopf auf der äußeren Schicht des Schichtpaketes aufliegt, nicht mehr oder nur noch geringfügig mit dem Schichtpaket im Eingriff steht. Stünde in diesem Moment noch ein erheblicher Gewindeabschnitt zur Verfügung, der das Schichtpaket noch nicht durchsetzt hat, würde nach Anschlag des Schraubenkopfes auf der äußeren Schicht eine Delamination des Schichtpaketes stattfinden, denn das noch im Eingriff mit der Schichtanordnung stehende Gewinde würde zumindest die am weitesten entfernte Schicht solange bis zum Schraubenkopf hinziehen, bis der gewindefreie Schaftabschnitt erreicht ist. Beendet man andererseits das Eindrehen der Schraube in einem Moment, in dem es noch zu keiner Delamination gekommen ist, das Gewinde aber noch mit dem Schichtpaket in Eingriff steht, so erhält die Befestigungsanordnung keine Rückdrehsicherheit. Der gewindefreie Abschnitt sollte aber auch nicht zu lang sein, denn bei zu langem gewindefreien Abschnitt hat die Schraube ein zu großes Spiel in ihrer Endposition. Wenn oben davon die Rede ist, dass in dem Moment, wenn der Schraubenkopf an dem Schichtpaket anschlägt, eine maximale Schichtpaketdicke erreicht ist, so bedeutet dies nicht zwingend, dass die maximale Schichtpaketdicke erst genau in dem Moment des Anschlagens erreicht wird. Vielmehr kann diese auch bereits vorher erreicht werden. Es kommt also nicht auf den Zeitpunkt des Erreichens der maximalen Schichtdicke an, solange diese bei Anschlag des Schraubenkopfes am Schichtpaket erreicht ist.

Aus den vorstehend genannten Gründen, ist es besonders nützlich, dass die Länge L_{F} des gewindefreien Schaftabschnittes um höchstens 5% kleiner und um höchstens 20% größer ist als die maximale Schichtpaketdicke D_{p, max}.

Weiter bevorzugt ist, dass die Länge L_{F} des gewindefreien Schaftabschnittes um höchstens 3% kleiner und um höchstens 10% größer ist als die maximale Schichtpaketdicke D_{p, max}.

Des Weiteren kann vorgesehen sein, dass die Länge L_{F} des gewindefreien Schaftabschnittes gleich der maximalen Schichtpaketdicke D_{p, max} ist, so dass das Eindrehen der Schraube beendet wird, wenn der Schraubenkopf an dem Schichtpaket anschlägt. Hierdurch ist ein quasi spielfreier Sitz der Schraube in der Befestigungsanordnung gewährleistet.

Von besonderem Vorteil ist in diesem Zusammenhang, dass die Länge L_{F} des gewindefreien Schaftabschnitte kleiner als die maximale Schichtpaketdicke D_{p, max} ist und dass durch fortgesetztes Drehen der Schraube die Schichtpaketdicke auf eine Endschichtpaketdicke D_{p, end} verringert wird, wobei die Länge L_{F} des gewindefreien Schaftabschnittes gleich der Endschichtpaketdicke D_{p, end} ist. Als Ergebnis dieses Verfahrens sitzt die Schraube durch die rücktreibende Kraft der sich verringernden Schichtpaketdicke unter Spannung in der Befestigungsanordnung, was besondere Stabilität zur Folge hat.

Gemäß einer weiteren bevorzugten Ausführungsform des erfindungsgemäßen Verfahrens bzw. Verwendung=ist vorgesehen, dass der gewindefreie Schaftabschnitt mindestens teilweise einen Durchmesser aufweist, welcher grösser als der Kerndurchmesser des Gewindes und kleiner als der Gewindeaußendurchmesser ist. Da zumindest die äußerste Schicht des Schichtpaketes im Allgemeinen so vorgebohrt sein wird, so dass die Schraube mit ihrem Gewinde ohne Kontakt durch die Bohrung hindurchgeführt werden kann, hat die Bohrung einen deutlich größeren Durchmesser als der Kern des Gewindes. Indem der gewindefreie Schaftabschnitt nun zumindest teilweise mit größerem Durchmesser als der Kern des Gewindes gewählt wird, wird das Spiel in der Bohrung der äußeren Schicht vermindert. Ebenfalls liegt der Rand der trichterartigen Struktur, die sich beim Eindrehen der Schraube zumindest in der untersten Schicht bildet, auf diese Weise satt an dem gewindefreien Abschnitt mit vergrößertem Durchmesser an, was ebenfalls zur Stabilität der gesamten Befestigungsanordnung beiträgt.

Ebenfalls kann vorgesehen sein, dass der gewindefreie Schaftabschnitt mindestens teilweise einen Durchmesser aufweist, welcher kleiner als oder gleich dem Kerndurchmesser des Gewindes ist. Hierdurch wird erreicht, dass der gewindefreie Schaftabschnitt reibungsfrei in die Schichtanordnung eindringt.

Es kann vorgesehen sein, dass der gewindefreie Schaftabschnitt benachbart zu dem Schraubenkopf eine Stufe mit einem Schaftdurchmesser aufweist, welcher größer als der Kerndurchmesser des Gewindes ist.

Dadurch dass das Gewinde benachbart zu dem gewindefreien Schaftabschnitt mehrere Auflagepunkte für das Schichtpaket aufweist, die den gleichen Abstand zum Schraubenkopf aufweisen, wobei die Auflagepunkte den gewindefreien Schaftabschnitt begrenzen, berührt die trichterartige Struktur beim Zurückziehen der Schraube nicht nur das "abgehackte" Ende des Gewindes, sondern mehrere Punkte, wodurch die Stabilität der Befestigungsanordnung erhöht wird.

Es ist vorgesehen, dass die mehreren Auflagepunkte dadurch gebildet sind, dass das Gewinde benachbart zu dem gewindefreien Schaftabschnitt in eine plane, sich radial erstreckende Ebene ausläuft. Diese Ebene kann beispielsweise den gesamten Umfang des Schaftes umlaufen, so dass der Trichterrand gleichmäßig die Kraft der Schraube aufnimmt. Je nach Ausformung des Trichterrandes kann der Kontakt flächig oder eher linienförmig sein.

Ebenfalls kann vorgesehen sein, dass die mehreren Auflagepunkte dadurch gebildet sind, dass das Gewinde zwei- oder mehrgängig ist. Die Gänge der mehreren Gewinde enden an verschiedenen Umfangspunkten des Schraubenschaftes, wenn diese denselben Abstand zum Schraubenkopf aufweisen sollen. Folglich wird die Kraft der Schraube beim Zurückziehen derselben gleichmäßiger vom Trichterrand aufgenommen, als wäre nur ein Ende eines Gewindegangs an der Kraftaufnahme beteiligt.

Gemäß einer speziellen Ausführungsform ist vorgesehen, dass der gewindefreie Schaftabschnitt unmittelbar an die Spitze angrenzt. Im Rahmen der Erfindung liegt es also insbesondere, dass zwischen gewindefreiem Schaftabschnitt und Spitze kein zylindrischer, gewindetragender Schaftabschnitt vorgesehen ist. Vielmehr kann der gewindefreie Schaftabschnitt direkt in die konische, gewindetragende Spitze übergehen.

Es kann vorgesehen sein, dass eine Schraube mit einem Gewindedurchmesser größer als 5,8 mm verwendet wird. Die vorliegende Erfindung nutzt zumindest in bevorzugten Ausführungsformen die Auswölbung verdrängten Materials des Schichtpaketes in Einschraubrichtung der Schraube. Da die Menge an verdrängtem Material und damit auch die Veränderung der Schichtdicke beim Einschrauben der Schraube von dem Gewindedurchmesser der Schraube abhängt, zeigen sich die vorteilhaften erfindungsgemäßen Effekte bei verschiedenen Gewindedurchmessern unterschiedlich ausgeprägt. Es hat sich erwiesen, dass sich bei Gewindedurchmessern oberhalb von 5,8 mm besonders vorteilhafte Ergebnisse zu erzielen sind.

Darüber hinaus kann ebenfalls vorgesehen sein, dass eine Schraube mit einem Gewindedurchmesser größer als 6,5 mm verwendet wird.

In diesem Zusammenhang ist es nützlich, dass die von dem Schraubenkopf am weitesten entfernte Schicht eine maximale Dicke von 1 mm. Insbesondere die Dicke der am weitesten vom Schraubenkopf entfernten Schicht hat wesentlichen Einfluss auf den beschriebenen Verdrängungsmechanismus, weshalb bestimmte Schichtdicken besonders vorteilhafte Auswirkungen haben, insbesondere von weniger als 1 mm oder sogar von 0,7 mm oder sogar weniger als 0,5 mm. Das Verfahren ist auf dieser Grundlage geeignet, an Fassaden mit sehr dünnen Außenschichten Profile und andere Aufbauten anzubringen, welche erhöhte Anzugswerte benötigen.

Insbesondere für Außenanwendungen kann die Schraube teilweise oder vollständig aus einem austenitischen Material gefertigt sein.

Die Erfindung wird nun mit Bezug auf die begleitenden Zeichnungen anhand besonders bevorzugter Ausführungsformen beispielhaft erläutert.

Es zeigen:
- Figur 1: eine erste Ausführungsform;
- Figur 2: eine zweite Ausführungsform
- Figur 3: eine dritte Ausführungsform
- Figur 4: eine vierte Ausführungsform

Bei der nachfolgenden Beschreibung der Zeichnungen bezeichnen gleiche Bezugszeichen gleiche oder vergleichbare Elemente.

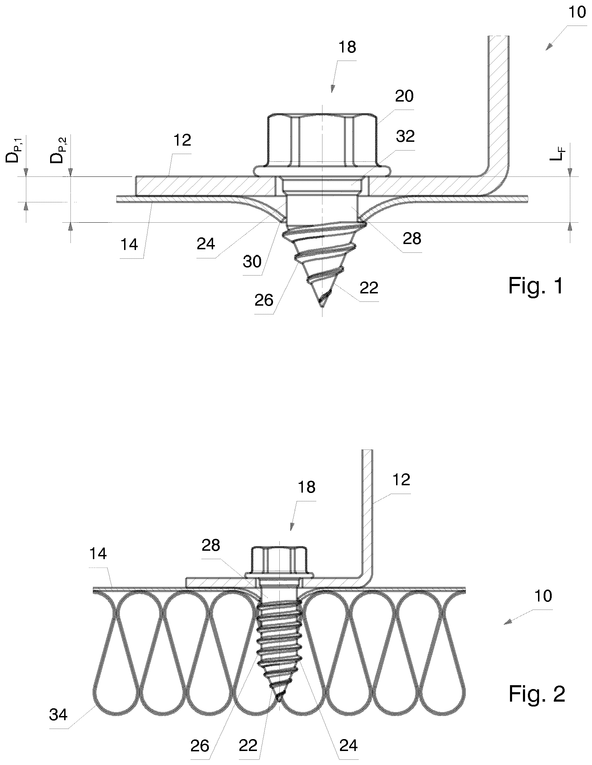

Figur 1 zeigt eine erste Ausführungsform einer Befestigungsanordnung 10. Die Befestigungsanordnung 10 umfasst ein dünnes Blech 14 und ein daran angeordnetes weiteres Blech 12, welches in der vorliegenden Ausführungsform dicker ist als das dünne Blech 14. Die Bleche 12, 14 bilden ein Blechpaket beziehungsweise Schichtpaket 12, 14. Die Befestigungsanordnung 10 weist ebenfalls eine Schraube 18 mit einem Schraubenkopf 20 und einer Verdrängungsspitze 22 auf. In die Verdrängungsspitze 22 läuft ein Gewinde 26. Die Verdrängungsspitze 22 und der Kopf 20 der Schraube 18 sind über einen Schaft 24 miteinander verbunden. Im vorliegenden Ausführungsbeispiel ist der Schaft 24 vollständig gewindefrei, das heißt unmittelbar an den Schaft 24 setzt die sich vom Schraubenkopf 20 weg verjüngende Verdrängungsspitze 22 mit dem Gewinde 26 an. Anders gesagt, der gewindefreie Schaftabschnitt 28 hat eine Länge L_{F}, die der Gesamtlänge des Schaftes 24 entspricht. Der Schaft 24 umfasst ebenfalls eine Stufe 32, welche einen größeren Durchmesser als der gewindefreie Schaftabschnitt 28 beziehungsweise im vorliegenden Fall der gesamte Schaft 24 hat. Diese Stufe 32 sorgt für einen verbesserten Sitz der Schraube 20 im Loch des äußeren Blechs 12 des Blechpaktes 12, 14.

Vor dem Eindrehen der Schraube 18 in das Blechpaket 12, 14 hat das äußere Blech 12 in dieser Ausführungsform und in allen anderen hier dargestellten Ausführungsformen bereits ein Loch. Dies ist nicht zwingend, jedoch bevorzugt. Das dünne Blech 14, ist vor dem Eindrehen der Schraube 18 in der Regel unversehrt, und es liegt plan an dem äußeren Blech 12 an. Das dünne Blech 14 erstreckt sich über das Loch des äußeren Blechs 12 und weist in der Regel keine oder eine für die vorliegenden Zusammenhänge unwesentliche Verformungen auf. Das Blechpaket 12, 14 hat vor dem Eindrehen der Schraube 18 in der gesamten Umgebung der Schraube eine konstante Dicke Dp_{, 1}, konstante Blechdicken vorausgesetzt. Wird nun die Schraube 18 durch das Loch des äußeren Blechs 12 geführt und in das dünne Blech 14 geschraubt, so verdrängt die Verdrängungsspitze 22 der Schraube 18 Material des dünnen Blechs 14 in Einschraubrichtung der Schraube 18. Hierdurch bildet sich eine trichterartige Struktur 30. Im dargestellten Fertigzustand der Befestigungsanordnung 10 hat das Blechpaket 12, 14 hierdurch in unmittelbarer Nachbarschaft zur Schraube 18 eine vergrößerte Dicke D_{p, 2}. Diese vergrößerte Dicke D_{p, 2} entspricht bei der vorliegenden Ausführungsform der Länge L_{F} des gewindefreien Schaftabschnittes 28. Das Gewinde 26 der Schraube 18 steht in diesem Fertigzustand der Befestigungsanordnung 10 nicht mehr mit dem Blechpaket 12, 14, das heißt insbesondere nicht mehr mit dem dünnen Blech 14 in Eingriff. Allerdings sorgt die trichterartige Struktur 30 des dünnen Bleches 14 für einen Anschlag, der ein Zurückziehen beziehungsweise Zurückdrehen der Schraube 18 verhindert.

Der dargestellte Fertigzustand der Befestigungsanordnung 10 kann, je nach beteiligten Längen, Dicken und Materialien, auf verschiedene Weise erreicht werden. Im einfachsten Fall ist die Länge L_{F} des gewindefreien Schaftabschnittes 28 genau so auf die Art und Beschaffenheit der anderen Komponenten abgestimmt, dass in dem Moment, wenn der Schraubenkopf 20 auf dem äußeren Blech 12 aufsitzt, der dargestellte Fertigzustand der Befestigungsanordnung 10 erreicht ist, das Gewinde 26 also genau in dem Moment die trichterartige Struktur 30 des dünnen Bleches 14 verlässt. Es ist aber auch möglich und besonders bevorzugt, dass in dem Moment, wenn der Schraubenkopf 20 auf dem äußeren Blech 12 aufsitzt, das Gewinde 26 noch geringfügig mit der trichterartigen Struktur 30 in Eingriff steht. Ein Weiterdrehen der Schraube 18 bewirkt dann, dass die trichterartige Struktur 30 zurück in Richtung Schraubenkopf gezogen wird. Erst dann verliert die trichterartige Struktur 30 den Eingriff mit dem Gewinde 26. In diesem Moment steht die Befestigungsanordnung 10 durch die vom Schraubenkopf 18 und Gewinde 26 auf das Blechpaket 12, 14 ausgeübten Kräfte unter Spannung, so dass eine besonders stabile Befestigungsanordnung 10 hergestellt ist.

Figur 2 zeigt eine zweite Ausführungsform einer Befestigungsanordnung 10. Die Befestigungsanordnung 10 trägt hier eine Dämmschicht 34, welche mit einem sehr dünnen Blech 14 mit einer Dicke von beispielsweise einem Millimeter verbunden ist. Im Unterschied zu der in Figur 1 dargestellten Befestigungsanordnung ist bei der Befestigungsanordnung 10 gemäß Figur 2 eine Schraube 18 eingebunden, die neben dem gewindefreien Schaftabschnitt 28 einen gewindetragenden Schaftabschnitt aufweist. Von diesem ausgehend läuft das Gewinde 26 in die Verdrängungsspitze 22 der Schraube 18.

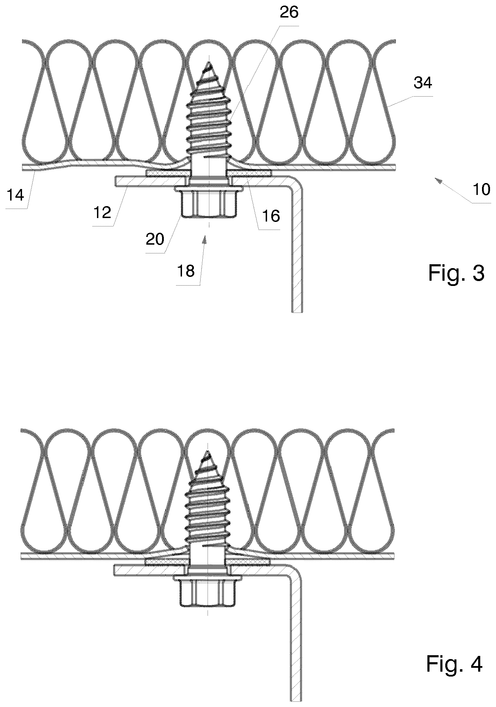

Figur 3 zeigt eine dritte Ausführungsform einer Befestigungsanordnung 10. Die hier gezeigte Befestigungsanordnung 10 entspricht weitgehend derjenigen aus Figur 1. Allerdings ist das innere Blech 14 nicht als ebenes Blech ausgebildet, sondern als Profilblech. Ein weiterer Unterschied besteht darin, dass das äußere Blech 12 nicht direkt auf dem die Dämmschicht 34 tragenden Blech 14 aufliegt. Vielmehr ist ein Zwischenelement 16 vorgesehen, welches ebenfalls als Blech ausgebildet sein kann. Das Zwischenelement 16 kann ebenfalls als Scheibe realisiert sein, die aus Metall oder zum Beispiel einem Elastomer besteht. Insbesondere kann es sich bei dem Zwischenelement 16 um ein Dichtband handeln. Dieses ist komprimierbar, so dass das Schichtpaket 12, 14, 16 insgesamt dann komprimiert werden kann, wenn das Gewinde 26 bei auf dem Blech 12 aufsitzendem Schraubenkopf 20 noch mit dem inneren Blech 14 in Eingriff steht. Hierdurch können größere Gewindelängen, die im Moment des Aufsitzens des Schraubenkopfes 20 auf dem äußeren Blech 12 noch mit dem inneren Blech 14 in Eingriff stehen, toleriert werden, ohne dass es zu einer unerwünschten Delamination des Schichtpaketes kommt. Eine Befestigungsanordnung mit Dichtband ist insbesondere für Außenanwendungen geeignet, während eine Befestigungsanordnung ohne Dichtband, wie sie beispielhaft in Figur 1 gezeigt ist, insbesondere bei Innenanwendungen zum Einsatz kommt.

Figur 4 zeigt eine vierte Ausführungsform einer Befestigungsanordnung 10. Die Befestigungsanordnung 10 gemäß Figur 4 entspricht derjenigen aus Figur 3. Im Unterschied zu Figur 3 ist das innere Blech 14 hier nicht profiliert, sondern eben.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein, wobei der Schutzbereich der Erfindung durch die Ansprüche definiert wird.

### Bezugszeichenliste

- 10: Befestigungsanordnung
- 12: Blech
- 14: Blech
- 16: Zwischenelement
- 18: Schraube
- 20: Schraubenkopf
- 22: Spitze
- 24: Schaft
- 26: Gewinde
- 28: gewindefreier Schaftabschnitt
- 30: trichterartige Struktur
- 32: Stufe
- 34: Dämmschicht

## Patentansprüche

1. Verfahren zum Herstellen einer Befestigungsanordnung (10) mit einem Schichtpaket (12, 14, 16) und einer Schraube (18), mit folgenden Schritten:
- Eindrehen der Schraube (18) in das Schichtpaket (12, 14, 16), wobei zumindest die von dem Schraubenkopf (20) am weitesten entfernte Schicht (14) des Schichtpakets (12, 14, 16) in Einschraubrichtung verformt wird, so dass eine Dicke Dₚ des Schichtpaketes (12, 14, 16) in einem Bereich unmittelbar um die Schraube (18) vergrößert wird,
- Fortsetzen des Eindrehens der Schraube (18), bis der Schraubenkopf (20) an dem Schichtpaket anschlägt, wobei in diesem Moment eine maximale Schichtpaketdicke D_{p, max} erreicht ist und die Länge L_{F} des gewindefreien Schaftabschnittes (28) um höchstens 10% kleiner und um höchstens 30% größer ist als die maximale Schichtpaketdicke D_{p,max},
wobei die Schraube (18)
• einen mit einem Angriff ausgestatteten Schraubenkopf (20),
• einen in eine Verdrängungsspitze (22) laufenden Schaft (24),
• ein in die Verdrängungsspitze laufendes Gewinde (26)
• und einen zwischen dem Gewinde (26) und dem Schraubenkopf (20) angeordneten gewindefreien Schaftabschnitt (28) aufweist,
• wobei das Gewinde (26) benachbart zu dem gewindefreien Schaftabschnitt (28) mehrere Auflagepunkte für das Schichtpaket (12, 14, 16) aufweist, die den gleichen Abstand zum Schraubenkopf (20) aufweisen und so den gewindefreien Schaftabschnitt (28) begrenzen
• wobei diese Auflagepunkte dadurch gebildet sind, dass das Gewinde (26) in eine plane, sich radial erstreckende Ebene ausläuft.

2. Verfahren nach Anspruch 1, **dadurch gekennzeichnet, dass** die Länge L_{F} des gewindefreien Schaftabschnittes (28) um höchstens 5% kleiner und um höchstens 20% größer ist als die maximale Schichtpaketdicke D_{p, max}.

3. Verfahren nach Anspruch 1 oder 2, **dadurch gekennzeichnet, dass** die Länge L_{F} des gewindefreien Schaftabschnittes (28) um höchstens 3% kleiner und um höchstens 10% größer ist als die maximale Schichtpaketdicke D_{p, max}.

4. Verfahren nach einem der vorhergehenden Ansprüche, **dadurch gekennzeichnet, dass** die Länge L_{F} des gewindefreien Schaftabschnittes (28) gleich der maximalen Schichtpaketdicke D_{p, max} ist, so dass das Eindrehen der Schraube beendet wird, wenn der Schraubenkopf (20) an dem Schichtpaket anschlägt.

5. Verfahren nach einem der Ansprüche 1 bis 3, **dadurch gekennzeichnet, dass** die Länge L_{F} des gewindefreien Schaftabschnittes (28) kleiner als die maximale Schichtpaketdicke D_{p, max} ist und dass durch fortgesetztes Drehen der Schraube die Schichtpaketdicke auf eine Endschichtpaketdicke D_{p, end} verringert wird, wobei die Länge L_{F} des gewindefreien Schaftabschnittes (28) gleich der Endschichtpaketdicke D_{p, end} ist.

6. Verfahren nach einem der vorhergehenden Ansprüche, **dadurch gekennzeichnet, dass** der gewindefreie Schaftabschnitt (28) mindestens teilweise einen Durchmesser aufweist, welcher grösser als der Kerndurchmesser des Gewindes (26) und kleiner als der Gewindeaußendurchmesser ist.

7. Verfahren nach einem der Ansprüche 1 bis 5, **dadurch gekennzeichnet, dass** der gewindefreie Schaftabschnitt (28) mindestens teilweise einen Durchmesser aufweist, welcher kleiner als oder gleich dem Kerndurchmesser des Gewindes (26) ist.

8. Verfahren nach einem der vorhergehenden Ansprüche, **dadurch gekennzeichnet, dass** der gewindefreie Schaftabschnitt (28) benachbart zu dem Schraubenkopf eine Stufe (32) mit einem Schaftdurchmesser aufweist, welcher größer als der Kerndurchmesser des Gewindes ist.

9. Verfahren nach einem der vorhergehenden Ansprüche, **dadurch gekennzeichnet, dass** die mehreren Auflagepunkte dadurch gebildet sind, dass das Gewinde zwei- oder mehrgängig ist.

10. Verfahren nach einem der vorhergehenden Ansprüche, **dadurch gekennzeichnet, dass** der gewindefreie Schaftabschnitt unmittelbar an die Spitze angrenzt.

11. Verfahren nach einem der vorhergehenden Ansprüche, **dadurch gekennzeichnet, dass** eine Schraube mit einem Gewindedurchmesser größer als 5,8 mm verwendet wird.

12. Verfahren nach einem der vorhergehenden Ansprüche, **dadurch gekennzeichnet, dass** eine Schraube mit einem Gewindedurchmesser größer als 6,5 mm verwendet wird.

13. Verfahren nach einem der vorhergehenden Ansprüche, **dadurch gekennzeichnet, dass** die von dem Schraubenkopf (20) am weitesten entfernte Schicht (14) eine maximale Dicke von 1 mm hat.

14. Verwendung einer Schraube (18) zum Herstellen einer Befestigungsanordnung (10) mit einem Schichtpaket (12, 14, 16) wobei die Schraube (18)
• einen mit einem Angriff ausgestatteten Schraubenkopf (20),
• einen in eine Verdrängungsspitze (22) laufenden Schaft (24),
• ein in die Verdrängungsspitze laufendes Gewinde (26)
• und einen zwischen dem Gewinde (26) und dem Schraubenkopf (20) angeordneten gewindefreien Schaftabschnitt (28) aufweist,
• wobei das Gewinde (26) benachbart zu dem gewindefreien Schaftabschnitt (28) mehrere Auflagepunkte für das Schichtpaket (12, 14, 16) aufweist, die den gleichen Abstand zum Schraubenkopf (20) aufweisen und so den gewindefreien Schaftabschnitt (28) begrenzen;
• wobei diese Auflagepunkte dadurch gebildet sind, dass das Gewinde (26) in eine plane, sich radial erstreckende Ebene ausläuft;
wobei das Herstellen der Befestigungsanordnung (10) folgende Schritte umfasst:
- Eindrehen der Schraube (18) in das Schichtpaket (12, 14, 16), wobei zumindest die von dem Schraubenkopf (20) am weitesten entfernte Schicht (14) des Schichtpakets (12, 14, 16) in Einschraubrichtung verformt wird, so dass eine Dicke Dₚ des Schichtpaketes (12, 14, 16) in einem Bereich unmittelbar um die Schraube (18) vergrößert wird,
- Fortsetzen des Eindrehens der Schraube (18), bis der Schraubenkopf (20) an dem Schichtpaket anschlägt, wobei in diesem Moment eine maximale Schichtpaketdicke D_{p, max} erreicht ist und die Länge L_{F} des gewindefreien Schaftabschnittes (28) um höchstens 10% kleiner und um höchstens 30% größer ist als die maximale Schichtpaketdicke D_{p, max}.

## Claims

1. A method for producing a fastening arrangement (10) with a layer packet (12, 14, 16) and a screw (18), comprising the following steps:
- screwing the screw (18) into the layer packet (12, 14, 16), wherein at least the layer (14) of the layer packet (12, 14, 16) furthest away from the screw head (20) is deformed in the screwing direction so that a thickness Dₚ of the layer packet (12, 14, 16) directly around the screw (18) is increased,
- Continuing the screwing-in of the screw (18) until the screw head (20) abuts against the layer packet, at which moment a maximum layer packet thickness D_{p,max} is reached and the length L_{F} of the threadless shaft portion (28) is at most 10 % smaller and at most 30 % greater than the maximum layer packet thickness D_{p,max},
the screw (18) having
• a screw head (20) equipped with an engagement point,
• a shaft (24) extending into a displacement tip (22),
• a thread (26) extending into the displacement tip
• and a threadless shaft portion (28) arranged between the thread (26) and the screw head (20),
• wherein the thread (26) has, adjacent the threadless shaft portion (28), a plurality of support points for the layer packet (12, 14, 16) which are at the same distance from the screw head (20) and thus delimit the threadless shaft portion (28)
• wherein the support points are formed in that the thread (26) extends into a planar radially extending plane.

2. The method according to claim 1, **characterized in that** the length L_{F} of the threadless shaft portion (28) is at most 5 % smaller and at most 20 % greater than the maximum layer packet thickness D_{p,max}.

3. The method according to claim 1 or 2, **characterized in that** the length L_{F} of the threadless shaft portion (28) is at most 3 % smaller and at most 10 % greater than the maximum layer packet thickness D_{p,max}.

4. The method according to any one of the preceding claims, **characterized in that** the length L_{F} of the threadless shaft portion (28) equals the layer packet thickness D_{p,max} so that screwing in of the screw is completed when the screw head (20) abuts against the layer packet.

5. The method according to any of claims 1 to 3, **characterized in that** the length L_{F} of the threadless shaft portion (28) is less than the maximum layer packet thickness D_{p,max} and that by continuing to turn the screw, the layer packet thickness is reduced to a final layer pack thickness D_{p,end}, the length L_{F} of the threadless shaft portion (28) being equal to the final layer packet thickness D_{p,end}.

6. The method according to any one of the preceding claims, **characterized in that** the threadless shaft portion (28) at least partially has a diameter which is larger than the core diameter of the thread (26) and smaller than the outer diameter of the thread.

7. The method according to any of claims 1 to 5, **characterized in that** the threadless shaft portion (28) at least partially has a diameter which is less than or equal to the core diameter of the thread (26).

8. The method according to one of the preceding claims, **characterized in that** the threadless shaft portion (28) adjacent to the screw head comprises a step (32) having a shaft diameter which is larger than the core diameter of the thread.

9. The method according to any one of the preceding claims, **characterized in that** the plurality of support points are formed **in that** the thread is a double-start or multi-start thread.

10. The method according to any one of the preceding claims, **characterized in that** the threadless shaft portion directly adjoins the tip.

11. The method according to any one of the preceding claims, **characterized in that** a screw having a thread diameter of greater than 5.8 mm is used.

12. The method according to any one of the preceding claims, **characterized in that** a screw having a thread diameter of greater than 6.5 mm is used.

13. The method according to any one of the preceding claims, **characterized in that** the layer (14) that is furthest away from the screw head (20) has a maximum thickness of 1 mm.

14. Use of a screw (18) for producing a fastening arrangement (10) with a layer packet (12, 14, 16), the screw (18) having
• a screw head (20) equipped with an engagement point,
• a shaft (24) extending into a displacement tip (22),
• a thread (26) extending into the displacement tip
• and a threadless shaft portion (28) arranged between the thread (26) and the screw head (20),
• wherein the thread (26) has, adjacent the threadless shaft portion (28), a plurality of support points for the layer packet (12, 14, 16) which are at the same distance from the screw head (20) and thus delimit the threadless shaft portion (28)
• wherein the support points are formed in that the thread (26) extends into a plane radially extending plane;
wherein producing the fastening arrangement (10) comprises the following steps:
- screwing the screw (18) into the layer packet (12, 14, 16), wherein at least the layer (14) of the layer packet (12, 14, 16) furthest away from the screw head (20) is deformed in the screwing direction so that a thickness Dₚ of the layer packet (12, 14, 16) directly around the screw (18) is increased,
- Continuing the screwing-in of the screw (18) until the screw head (20) abuts against the layer packet, at which moment a maximum layer packet thickness D_{p,max} is reached and the length L_{F} of the threadless shaft portion (28) is at most 10 % smaller and at most 30 % greater than the maximum layer packet thickness D_{p,max}.

## Revendications

1. Procédé destiné à la réalisation d'un système de fixation (10) avec un ensemble de couches (12, 14, 16) et une vis (18) avec les étapes suivantes :
- vissage de la vis (18) dans l'ensemble de couches (12, 14, 16), sachant qu'au moins la couche (14) la plus éloignée de la tête de vis (20) de l'ensemble de couches (12, 14, 16) est déformée en direction du vissage de telle manière qu'une épaisseur Dₚ de l'ensemble de couches (12, 14, 16) est agrandie dans une zone se situant directement autour de la vis (18),
- poursuite du vissage de la vis (18) jusqu'à ce que la tête de vis (20) vienne en butée sur l'ensemble de couches, sachant qu'à ce moment une épaisseur maximale d'ensemble de couches D_{p.max} est atteinte et la longueur L_{F} de la section de tige non filetée (28) est au maximum de 10 % plus petite et au maximum de 30 % plus grande que l'épaisseur maximale d'ensemble de couches D_{p.max},
sachant que la vis (18) comporte
• une tête de vis (20) dotée d'un engagement,
• une tige (24) continuant dans une pointe de refoulement (22),
• un filetage (26) continuant dans la pointe de refoulement,
• et une section de tige (28) non filetée disposée entre le filetage (26) et la tête de vis (20),
• sachant que le filetage (26) voisin de la section de tige (28) non filetée comporte plusieurs points d'appui pour l'ensemble de couches (12, 14, 16), qui comportent la même distance de la tête de vis (20) et limitent ainsi la section de tige non filetée (28)
• sachant que ces points d'appui sont formés par le fait que le filetage (26) se termine dans un plan plan, s'étendant radialement.

2. Procédé selon la revendication 1, **caractérisé en ce que** la longueur L_{F} de la section de tige non filetée (28) est au maximum de 5 % plus petite et au maximum plus grande de 20 % que l'épaisseur maximale de l'ensemble de couches D_{p.max}.

3. Procédé selon la revendication 1 ou 2, **caractérisé en ce que** la longueur L_{F} de la section de tige non filetée (28) est au maximum de 3 % plus petite et au maximum de 10 % plus grande que l'épaisseur maximale de l'ensemble de couches D_{p.max}.

4. Procédé selon l'une quelconque des revendications précédentes, **caractérisé en ce que** la longueur L_{F} de la section de tige non filetée (28) est égale à l'épaisseur maximale de l'ensemble de couches D_{p.max} de telle sorte que le vissage de la vis est terminé si la tête de vis (20) vient en butée sur l'ensemble de couches.

5. Procédé selon l'une quelconque des revendications 1 à 3, **caractérisé en ce que** la longueur L_{F} de la section de tige non filetée (28) est plus petite que l'épaisseur maximale de l'ensemble de couches D_{p.max} et **en ce qu'**en continuant à tourner la vis, l'épaisseur de l'ensemble de couches est réduite à une épaisseur d'ensemble de couches finale D_{p.fin}, sachant que la longueur L_{F} de la section de tige non filetée (28) est égale à l'épaisseur d'ensemble de couches finale D_{p.fin}.

6. Procédé selon l'une quelconque des revendications précédentes, **caractérisé en ce que** la section de tige non filetée (28) comporte au moins en partie un diamètre, lequel est supérieur au diamètre de noyau du filetage (26) et plus petit que le diamètre extérieur de filetage.

7. Procédé selon l'une quelconque des revendications 1 à 5, **caractérisé en ce que** la section de tige non filetée (28) comporte au moins en partie un diamètre, lequel est plus petit ou égal au diamètre de noyau du filetage (26).

8. Procédé selon l'une quelconque des revendications précédentes, **caractérisé en ce que** la section de tige non filetée (28) voisine de la tête de vis comporte un gradin (32) avec un diamètre de tige, lequel est supérieur au diamètre du noyau du filetage.

9. Procédé selon l'une quelconque des revendications précédentes, **caractérisé en ce que** les nombreux points d'appui sont formés par le fait que le filetage est double ou multiple.

10. Procédé selon l'une quelconque des revendications précédentes, **caractérisé en ce que** la section de tige non filetée est directement limitée à la pointe.

11. Procédé selon l'une quelconque des revendications précédentes, **caractérisé en ce qu'**une vis avec un diamètre de filetage supérieur à 5,8 mm est utilisée.

12. Procédé selon l'une quelconque des revendications précédentes, **caractérisé en ce qu'**une vis avec un diamètre de filetage supérieur à 6,5 mm est utilisée.

13. Procédé selon l'une quelconque des revendications précédentes, **caractérisé en ce que** la couche la plus éloignée (14) de la tête de vis (20) a une épaisseur maximale de 1 mm.

14. Utilisation d'une vis (18) pour la réalisation d'un système de fixation (10) avec un ensemble de couches (12, 14, 16), sachant que la vis (18) comporte
• une tête de vis (20) dotée d'un engagement,
• une tige (24) continuant dans une pointe de refoulement (22),
• un filetage (26) continuant dans la pointe de refoulement,
• et une section de tige (28) non filetée disposée entre le filetage (26) et la tête de vis (20),
• sachant que le filetage (26) voisin de la section de tige (28) non filetée comporte plusieurs points d'appui pour l'ensemble de couches (12, 14, 16), qui comportent la même distance de la tête de vis (20) et limitent ainsi la section de tige non filetée (28),
• sachant que ces points d'appui sont formés par le fait que le filetage (26) se termine dans un plan plan, s'étendant radialement,
sachant que la réalisation du système de fixation (10) comprend les étapes suivantes :
- vissage de la vis (18) dans l'ensemble de couches (12, 14, 16), sachant qu'au moins la couche (14) la plus éloignée de la tête de vis (20) de l'ensemble de couches (12, 14, 16) est déformée en direction du vissage de telle manière qu'une épaisseur Dₚ de l'ensemble de couches (12, 14, 16) est agrandie dans une zone se situant directement autour de la vis (18),
- poursuite du vissage de la vis (18) jusqu'à ce que la tête de vis (20) vienne en butée sur l'ensemble de couches, sachant qu'à ce moment une épaisseur d'ensemble de couches D_{p.max} est atteinte et la longueur L_{F} de la section de tige non filetée (28) est au maximum de 10 % plus petite et au maximum de 30 % plus grande que l'épaisseur maximale d'ensemble de couches D_{p.max}.
